# EUROPEAN PATENT APPLICATION

(11) **EP 2 610 407 A2**
(43) Date of publication of application: **03.07.2013**
(21) Application number: 11820159.9
(22) Date of filing: 23.08.2011
(51) Int. Cl.: E02F 9/20, E02F 9/26

(54) **APPARATUS AND METHOD FOR CONTROLLING CONSTRUCTION MACHINERY**

(30) Priority: 23.08.2010 KR 20100081222
(71) Applicant: Doosan Infracore Co., Ltd., Dong-gu Incheon 401-020 (KR)
(72) Inventor: OH, Joonho, Yongin Si Gyeonggi-Do 448-795 (KR); JANG, Dal Sik, Incheon 401-804 (KR); HONG, Daehie, Anyang Si Gyeonggi-Do 431-070 (KR); KIM, Ki Young, Cheonan Si Chungcheongnam-Do 331-090 (KR)
(74) Representative: Barth, Stephan Manuel
(86) International application number: PCT/KR2011/006203
(87) International publication number: WO 2012/026732

(57) **Abstract**

The present invention relates to an apparatus and method for controlling construction machinery, and an operation pattern control device according to the present invention includes an operation pattern recognition device configured to analyze operation being performed by the construction machinery and a driving control device configured to control individual equipment of the construction machinery to match the operation pattern analyzed by the operation pattern recognition device, and the operation pattern recognition device includes: a data accumulation unit configured to receive and accumulate a manipulation signal of an operator; an operation pattern analysis unit configured to determine a present operation pattern by analyzing data of the accumulated manipulation signal; a probability model analysis unit configured to determine data, which is not determined from the operation pattern analysis unit, by using a probability model; and a pattern result output unit configured to output operation determined from the operation pattern analysis unit and the probability model analysis unit to the driving control device.

## Description

### [Technical Field]

The present invention relates to an apparatus and a method for controlling construction machinery. More specifically, the present invention relates to an apparatus and a method for controlling construction machinery, capable of improving fuel efficiency by controlling each operation apparatus of construction machinery such as an excavator in accordance with operation patterns.

### [Background Art]

Construction machinery refers to equipment used to excavate and convey soil and sand at construction sites such as civil operation sites. The excavator as one type of the construction machinery includes a traveling body for moving the equipment, an upper revolving body mounted on the traveling body to be rotated 360°, and a front operation apparatus such as a boom, an arm, and a bucket installed at a front side of the equipment in order to do operation.

The excavator is classified into a caterpillar track type crawler excavator and a tire type wheel excavator according to a traveling manner of the traveling body. Because the crawler excavator is more stable for operation and has higher operation productivity than the wheel excavator, the crawler excavatorshaving equipment weight ranging from 1 ton to more than 100 ton, that is, an ultra large crawler excavator, are widely used at various operation sites. Meanwhile, while the wheel excavator has lower stability for operation than the crawler excavator due to a tire supporting structure, the wheel excavator allows the possibility of road traveling so as to be able to be moved to an operation site without using a trailer for transport and thus is mainly used at operation sites where operation and movement are frequently required.

The construction machinery such as the excavator or the like carries out operation such as excavation operation for digging into the ground at civil operation sites, lifting operation for conveying heavy weight materials, demolishing operation for dismantling buildings, and groung leveling operation for land grading. However, because the construction machinery may not actively cope with each of the various types of operation jobs, an optimum operation state corresponding to each of type of operation having operation properties that are different from each other may not be maintained. Accordingly, a problem occurs in that unnecessary fuel consumption is increased and it is difficult to reduce fuel expenses.

### [Disclosure]

### [Technical Problem]

The present invention has been made in an effort to solve the aforementioned problem and provide an apparatus and a method for controlling construction machinery, capable of improving fuel efficiency of the construction machinery by enabling an optimized control in accordance with properties of various types of operation that is being performed.

### [Technical Solution]

In order to achieve the above object, an apparatus for controlling construction machinery according to the prsent invetion includes: an operation pattern recognition device configured to analyze operation being performed by the construction machinery; and a driving control apparatus configured to control individual equipment of the construction machinery to match the operation pattern analyzed by the operation pattern recognitiondevice, in which the operation pattern recognition device includes: a data accumulation unit configured to receive and accumulate a manipulation signal of an operator; an operation pattern analysis unit configured to determine a present operation pattern by analyzing data of the accumulated manipulation signal; a probability model analysis unit configured to analyze data, which has not been analized, from the operation pattern analysis unit, by using a probability model; and a pattern result output unit configured to output operation determined from the operation pattern analysis unit and the probability model analysis unit to the driving control device.

The operation pattern analysis unit may include a first operation group pattern analysis unit configured to determine whether or not the operation pattern corresponds to at least one operation pattern included in a preset first operation group, and a second operation group pattern analysis unit configured to determine whether or not the operation patterns, which are not determined by the first operation group pattern analysis unit, correspond to at least one operation pattern included in a preset second operation group.

The probability model analysis unit may analyze frequency of operation with respect to the accumulated data, and determine present operation by applying the analyzed frequency of operation to a probability model according to each operation.

A operation pattern control method according to the present invention includes: receiving and accumulating a manipulation signal of individual equipment from a joystick through a data accumulation unit; determining a present operation pattern by analyzing data of the accumulated manipulation signal, through an operation pattern analysis unit; analyzing data, which has not been analized, from the operation pattern analysis unit, by using a probability model, through a probability model analysis unit; and outputting operation determined from the operation pattern analysis unit and the probability model analysis unit to a driving control device, which controls individual equipment, through a pattern result output unit.

### [Advantageous Effects]

According to the present invention, the construction machinery may be controlled to correspond to a pattern of operation that the construction machinery performs at present. Accordingly, unnecessary fuel consumption of the construction machinery may be reduced, and therefore fuel efficiency of the construction machinery may be improved.

Further, the present invention may distinguish even an operation pattern, which is difficult to be determined, by using a probability model, and thereby may maximize an effect of reducing fuel expenses.

In addition, the present invention may output an analyzed operation pattern to a screen display unit and thus provide an operator with information on the operation pattern that is performed at present.

### [Description of Drawings]

FIG. 1 is a block diagram illustrating a schematic configuration of an apparatus of controlling construction machinery, according to an exemplary embodiment of the present invention.

FIG. 2 is a flow chart illustrating a method of controlling construction machinery, according to an exemplary embodiment of the present invention.

FIG. 3 is a flow chart illustrating a method of controlling a probability model analysis unit which is illustrated in FIG. 1.

FIG. 4 is a flow chart which determines an operation pattern by applying a probability model for excavation operation of the construction machinery, according to an exemplary embodiment of the present invention.

FIG. 5 is a flow chart which determines an operation pattern by applying a probability model for ground leveling operation of the construction machinery, according to an exemplary embodiment of the present invention.

FIG. 6 is a flow chart which determines an operation pattern by applying a probability model for lifting operation of the construction machinery, according to an exemplary embodiment of the present invention.

### [Mode for Invention]

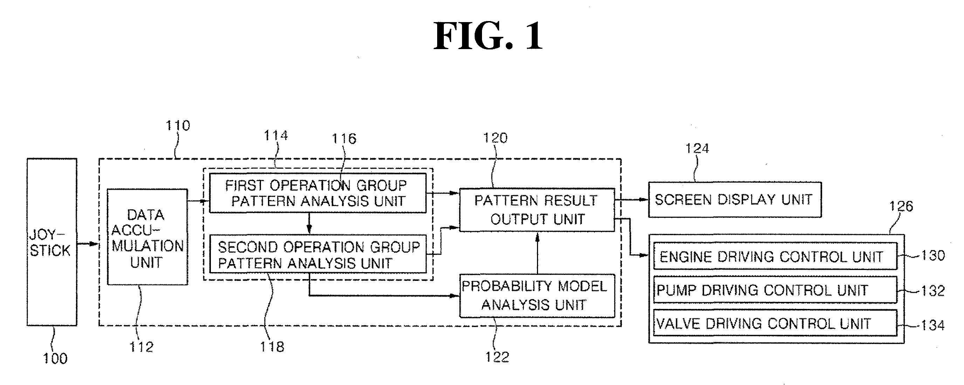

Hereinafter, preferred embodiment of the present invention will be described in detail with reference to FIGS. 1 to 6.

FIG. 1 illustrates a configuration of an apparatus for controlling construction machinery, according to an exemplary embodiment of the present invention. The aforementioned construction machinery includes various types of equipment, but an excavator will be described as an example in the present exemplary embodiment.

The apparatus for controlling construction machinery analyzes operation that is being currently performed by the excavator and controls each operation apparatus to match an operation pattern. To this end, the apparatus for controlling construction machinery includes an operation pattern recognition apparatus 110, a driving control apparatus 126, and a screen display unit 124. In addition, the operation pattern control apparatus may be used in the construction machinery such as a forklift or a crane as well as the excavator to control individual equipment in accordance with the operation pattern.

Specifically, the operation pattern recognition apparatus includes a data accumulation unit 112 which receives a manipulation signal of each operation apparatus from a joystick 100 and accumulates the manipulation signal, an operation pattern analysis unit 114 which analyzes data of the accumulated manipulation signal and determines the present operation pattern, a probability model analysis unit 122 which determines data of which an operation pattern is not determined by the operation pattern analysis unit 114 by using a probability model, and a pattern result output unit 120 which outputs operation determined by the operation pattern analysis unit 114 and the probability model analysis unit 122 to the driving control apparatus 126 and the screen display unit 124. The present exemplary embodiment has described as an example that the data accumulation unit 112 accumulates the manipulation signal, but the present invention is not limited thereto. For example, the data accumulation unit 112 may be used in an aspect in which a signal outputted from the driving control apparatus 126 to each operation apparatus or a signal outputted from a sensor that measures an acutal drive amount of each operation apparatus is accumulated in the data accumulation unit 112.

The operation pattern analysis unit 114 includes a first operation group pattern analysis unit 116 which determines the accumulated manipulation signal as a first operation group, and a second operation group pattern analysis unit 118 which determines the accumulated manipulation signal as a second operation group. The first operation group may include first operation, and the first operation may be lifting operation for conveying soil and sand. The second operation group may include second and third operation, the second operation may be excavation operation for digging into the ground, and the third operation may be ground leveling operation for land grading. The first to third operation are not limited to the lifting operation, the excavation operation, and the ground leveling operation, but will be described as examples.

The first operation group pattern analysis unit 116 analyzes data of the accumulated manipulation signal and determines the result as the first operation (lifting operation). The first operation group pattern analysis unit 116 outputs the data, which is determined as the first operation (lifting operation), to the pattern result output unit 120, and outputs the data, which is not determined as the first operation (lifting operation), to the second operation group pattern analysis unit 118.

The second operation group pattern analysis unit 118 analyzes the data outputted from the first operation group pattern analysis unit 116 and determines the result as the second operation (excavation operation) or the third operation (ground leveling operation). The second operation group pattern analysis unit 118 outputs the data, which is determined as the second operation (excavation operation) or the third operation (ground leveling operation), to the pattern result output unit 120, and outputs the data, which is not determined as the second operation (excavation operation) or the third operation (ground leveling operation), to the probability model analysis unit 122.

The probability model analysis unit 122 determines the data, which is not analyzed by the operation pattern analysis unit 114, as first to fourth operation (lifting operation, excavation operation, ground leveling operation, and trenching operation) by using a probability model, and then outputs the result to the pattern result output unit 120. Here, the fourth operation may be trenching operation which is difficult to be distinguished as one of the second operation and the third operation because the second operation (excavation operation) and the third operation (ground leveling operation) are combined.

The probability model analysis unit 122 analyzes frequency of operation with respect to the accumulated data, and determines the present operation by applying the analyzed frequency of operation to the probability model according to each operation. Specifically, in a case in which the operation having maximum frequency in the analyzed data is the first operation (lifting operation) (Max = C), the probability model analysis unit 122 determines an operation pattern of the data by applying the probability model according to the first operation (lifting operation). Further, in a case in which the operation having maximum frequency in the analyzed data is the second operation (excavation operation) (Max = A), the probability model analysis unit 122 determines an operation pattern of the data by applying the probability model according to the second operation (excavation operation). In addition, in a case in which the operation having maximum frequency in the analyzed data is the third operation (ground leveling operation) (Max = B), the probability model analysis unit 122 determines an operation pattern of the data by applying the probability model according to the third operation (ground leveling operation). The probability model according to each operation may be illustrated as Table 1.

Table 1

**[Table 1]**

| | | | | | |
|---|---|---|---|---|---|
| Max = A | A≥0.8 | | | | A |
| | A < 0.8 | C>2 | | | N.D |
| | | C=1 | A (except for C) ≥ 0.85 | | A |
| | | | A (except for C) < 0.85 | | D |
| | | C=0 | | | D |
| Max = B | B = all | | | | B |
| | B!=all | Immediately Previous = D | C >2 | | N.D |
| | | | C=1 | B (except for C) = 1 | B |
| | | | | B (except for C)! = 1 | D |
| | | | C=0 | | D |
| | | Immediately Previous! = D | C>2 | | N.D |
| | | | C=1 | B (except for C) = 1 | B |
| | | | | B (except for C)! = 1 | D |
| | | | C=0 | B ≥ 0.85 | B |
| | | | | B < 0.85 | D |
| Max = C | | | C≥6 | | C |
| | | | C<6 | | deferred |

In Table 1, A means the excavation operation (second operation), B means the ground leveling operation (third operation), C means the lifting operation (first operation), and D means the trenching operation (fourth operation), and Max = A represents the probability model in a case in which a mode value relates to the second operation, Max = B represents the probability model in a case in which a mode value relates to the third operation, and Max = C represents the probability model in a case in which a mode value relates to the first operation. In addition, A ≥ 0.8 means that the frequency of the an operation is equal to or more than 80% of the whole data, B = all means that the whole data is the B operation, B! = all means that the whole data is not the B operation, B (except for C) = 1 means that the whole data except for the C operation is the B operation, and N.D (Not Distinguishable) means that it is impossible to distinguish.

The pattern result output unit 120 transmits the first to fourth operation (lifting operation, excavation operation, ground leveling operation, and trenching operation) determined from the operation pattern analysis unit 114 and the probability model analysis unit 122 to the screen display unit 124 and the driving control apparatus 126.

The driving control apparatus 126 controls the individual equipment, and includes an engine driving control unit 130, a pump driving control unit 132, and a valve driving control unit 134. Here, the driving control apparatus 126 controls the individual equipment according to the operation pattern result received from the pattern result output unit 120.

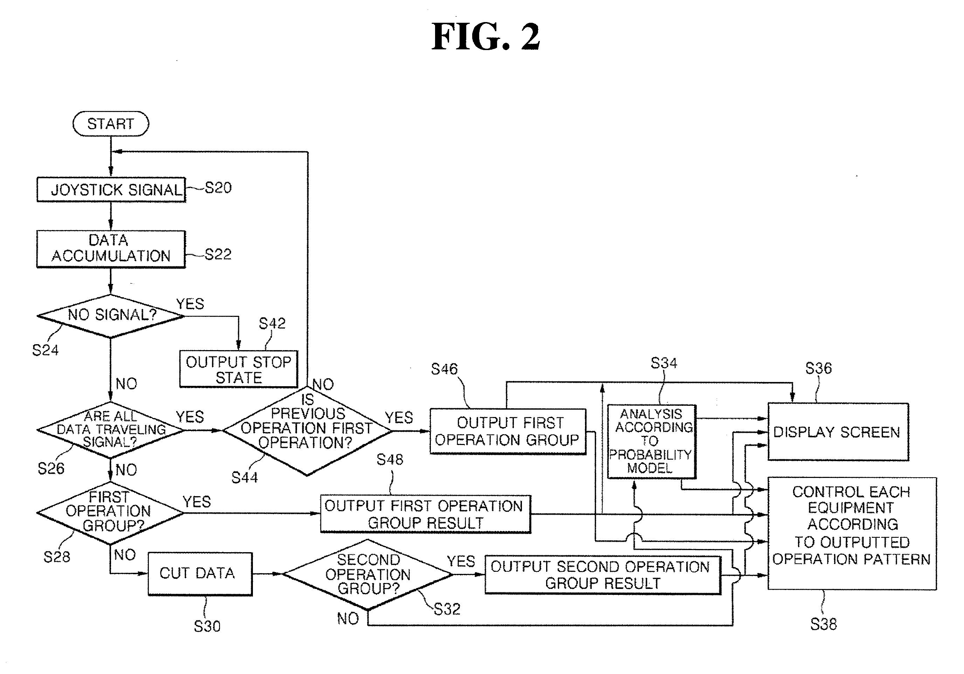

FIG. 2 is a flow chart illustrating an operation pattern control method according to the present invention.

Referring to FIG. 2, the data accumulation unit 112 receives the manipulation signal of the individual equipment from the joystick 100, and accumulates the manipulation signal (S20 and S22). At this time, the first operation group pattern analysis unit 116 determines whether or not the accumulated signal is present in the data accumulation unit 112 (S24).

In a case in which there is no accumulated signal in the data accumulation unit 112, the first operation group pattern analysis unit 116 outputs a stop signal to the screen display unit 124 and the driving control apparatus 126 (S42).

However, in a case in which there is data of the accumulated manipulation signal in the data accumulation unit 112, the first operation group pattern analysis unit 116 analyzes whether or not the whole data is a travel signal or whether or not there is another signal other than the travel signal (S26).

In a case in which the whole data is the travel signal, the first operation group pattern analysis unit 116 determines whether or not the immediately previous operation was the first operation (lifting operation) (S44). When the immediately previous operation is the first operation (lifting operation), the first operation group pattern analysis unit 116 determines the data as the first operation group. In the present exemplary embodiment, because only the case in which the "lifting operation" is included in the first operation group is set and described, the first operation group pattern analysis unit 116 determines the present operation as the "lifting operation" and outputs the result to the screen display unit 124 and the driving control apparatus 126.

In a case in which there is another signal other than the travel signal in the data, the first operation group pattern analysis unit 116 determines whether or not the data is the first operation (lifting operation) (S28).

In a case in which the data is determined as the first operation group, the first operation group pattern analysis unit 116 determines the present operation as the "lifting operation" and outputs the result to the screen display unit 124 and the driving control apparatus 126 (S48). As such, the "first operation (lifting operation)" is displayed on the screen display unit 124 (S36), and the driving control apparatus 126 controls the individual equipment to match the lifting operation pattern (S38).

However, in a case in which the data is not determined as the first operation (lifting operation), the first operation group pattern analysis unit 116 outputs the data to the second operation group pattern analysis unit 118. Because most of the operation of the excavator starts by operation of an arm, and therefore operation patterns may be differentiated according to a drive pattern of the arm, the second operation group pattern analysis unit 118 analyzes the data for each period based on a signal of the arm (S30).

The second operation group pattern analysis unit 118 determines whether or not the data is the second operation group (S32). It is preferred that the second operation group includes operation that is not included in the first operation group. In the present exemplary embodiment, only the case in which the second operation group includes the second operation (excavation operation) and the third operation (ground leveling operation) will be described.

In a case in which the data is determined as one of the second operation (excavation operation) or the third operation (ground leveling operation), the second operation group pattern analysis unit 118 determines the present operation as the "excavation operation" or the "ground leveling operation", and outputs the result to the screen display unit 124 and the driving control apparatus 126 (S50). Accordingly, the "excavation operation" or the "ground leveling operation" is displayed on the screen display unit 124 (S36), and the driving control apparatus 126 controls the individual equipment to match the operation pattern of the excavation operation or the ground leveling operation (S38).

In a case in which the data is not determined as the second operation or the third operation, the second operation group pattern analysis unit 118 outputs the data, which is not determined, to the probability model analysis unit 122.

The probability model analysis unit 122 determines the data, which is not analyzed by the operation pattern analysis unit 114, as the first to fourth operation (lifting operation, excavation operation, ground leveling operation, and trenching operation) by using the probability model, and supplies the determined data to the screen display unit 124 and the driving control apparatus 126. Accordingly, the data is displayed on the screen display unit 124 in accordance with the first to fourth operation patterns determined through the probability model analysis unit 122 (S36), and the driving control apparatus 126 controls the individual equipment in accordance with the first to fourth operation patterns (S38). Here, the fourth operation may be trenching operation which is difficult to be distinguished as one of the second operation and the third operation because the second operation (excavation operation) and the third operation (ground leveling operation) are combined. As such, the present invention controls the individual equipment in accordance with each operation pattern, and as a result, fuel efficiency may be improved, and unnecessary fuel consumption may be reduced.

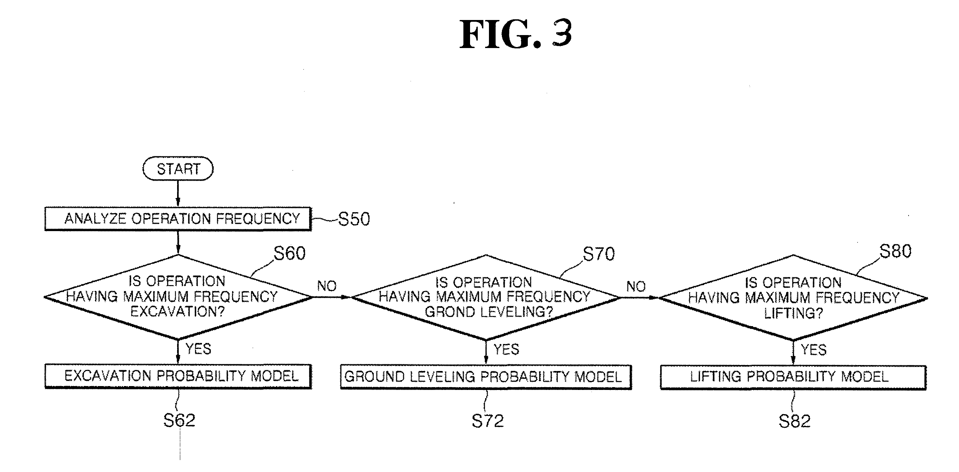

Meanwhile, a process in which the data, which is not determined from the operation pattern analysis unit 114, is determined as the first to fourth operation (lifting operation, excavation operation, ground leveling operation, and trenching operation) through the probability model analysis unit 122 will be described in detail with reference to FIGS. 3 to 6.

FIG. 3 is a flow chart according to the probability model analysis unit illustrated in FIG. 1.

First, the probability model analysis unit 122 analyzes frequency of operation with respect to the data that is not determined from the operation pattern analysis unit 114 (S50).

Thereafter, the probability model analysis unit 122 determines the operation having high frequency among the data, and determines the data as the first to fourth operation (lifting operation, excavation operation, ground leveling operation, and trenching operation) in accordance with the operation having maximum frequency by applying the probability model according to each operation, and outputs the result.

Specifically, the probability model analysis unit 122 determines whether or not the operation having a mode value is the second operation (excavation operation) (S60). In a case in which the operation having a mode value is the second operation (excavation operation), the probability model analysis unit 122 determines the data by applying the probability model according to the second operation (excavation operation) (S62).

In a case in which the operation having a mode value is not the second operation (excavation operation), the probability model analysis unit 122 determines whether or not the operation having a mode value is the third operation (ground leveling operation) (S70). In a case in which the operation having a mode value is the third operation (ground leveling operation), the probability model analysis unit 122 determines the data by applying the probability model according to the third operation (ground leveling operation) (S72).

In a case in which the operation having a mode value is not the third operation (ground leveling operation), the probability model analysis unit 122 determines whether or not the operation having a mode value is the first operation (lifting operation) (S 80). In a case in which the operation having a mode value is the first operation (lifting operation), the probability model analysis unit 122 determines the data by applying the probability model according to the first operation (lifting operation) (S82).

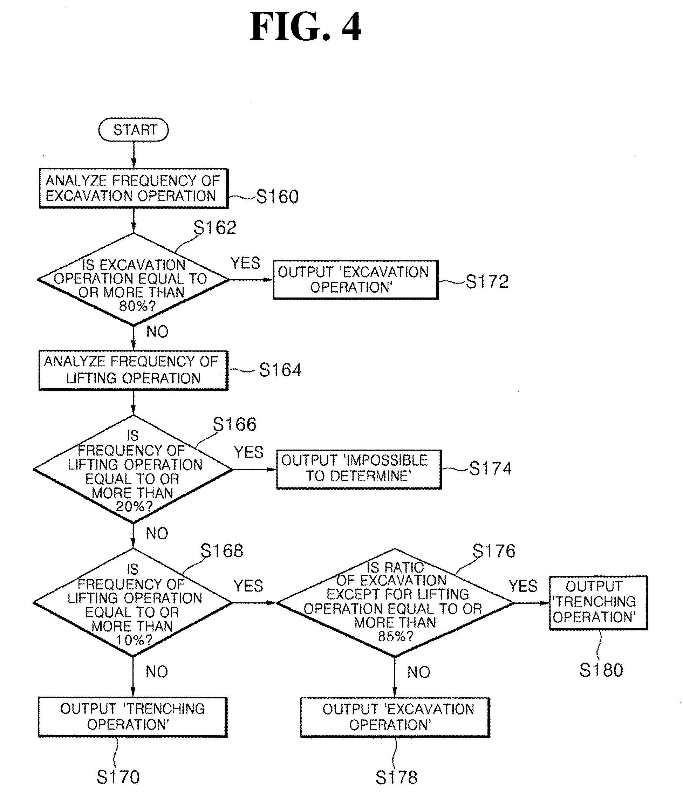

FIG. 4 is a flow chart which determines an operation pattern by applying data to excavation probability model when excavation operation has a mode value.

Referring to FIG. 4, when the operation having maximum frequency is the excavation operation as a result of an frequency of operation analysis, whether or not the excavation operation is equal to or more than a first reference value is determined. Here, the first reference value means the frequency of operation equal to or more than 80% (S 160 and S 162)

In a case in which the frequency of the excavation operation is equal to or more than 80%, the probability model analysis unit 122 determines the present operation as the "excavation operation", and outputs the result to the screen display unit 124 and the driving control apparatus 126 (S 172). Accordingly, the outputted operation is displayed on the screen display unit 124, and the driving control apparatus 126 controls the individual equipment in accordance with the excavation operation pattern.

In a case in which the frequency of the excavation operation is not equal to or more than 80%, the probability model analysis unit 122 analyzes the frequency of the lifting operation (S 164). That is, whether or not the frequency of the lifting operation is equal to or more than a second reference value is determined (S166). Here, the second reference value means the number of times of the lifting operation that is equal to or more than two.

In a case in which the number of times of the lifting operation is equal to or more than two, the probability model analysis unit 122 determines the present operation as "impossible to determine", and outputs the result to the screen display unit 124 and the driving control apparatus 126 (S 174).

In a case in which the number of times of the lifting operation is not equal to or more than two, the probability model analysis unit 122 determines whether or not the frequency of the lifting operation is a third reference value (S 168). The third reference value means the number of times of the lifting operation that is one.

In a case in which the number of times of the lifting operation is not one, the probability model analysis unit 122 determines the present operation as the fourth operation, that is, the "trenching operation", and outputs the result to the screen display unit 124 and the driving control apparatus 126 (S 170). Accordingly, the "trenching operation" is displayed on the screen display unit 124, and the driving control apparatus 126 controls the individual equipment in accordance with the "trenching operation".

In a case in which the number of times of the lifting operation is one, whether or not a ratio of the excavation operation except for the lifting operation is a fourth reference value is determined (S 176). Here, the fourth reference value means the frequency of operation that is equal to or more than 85%.

In a case in which the ratio of the excavation operation except for the lifting operation is equal to or more than 85%, the probability model analysis unit determines the present operation as the "excavation operation", and outputs the result (S 180). When the ratio of the excavation operation except for the lifting operation is not equal to or more than 85%, the probability model analysis unit determines the present operation as the "trenching operation", and outputs the result (S178).

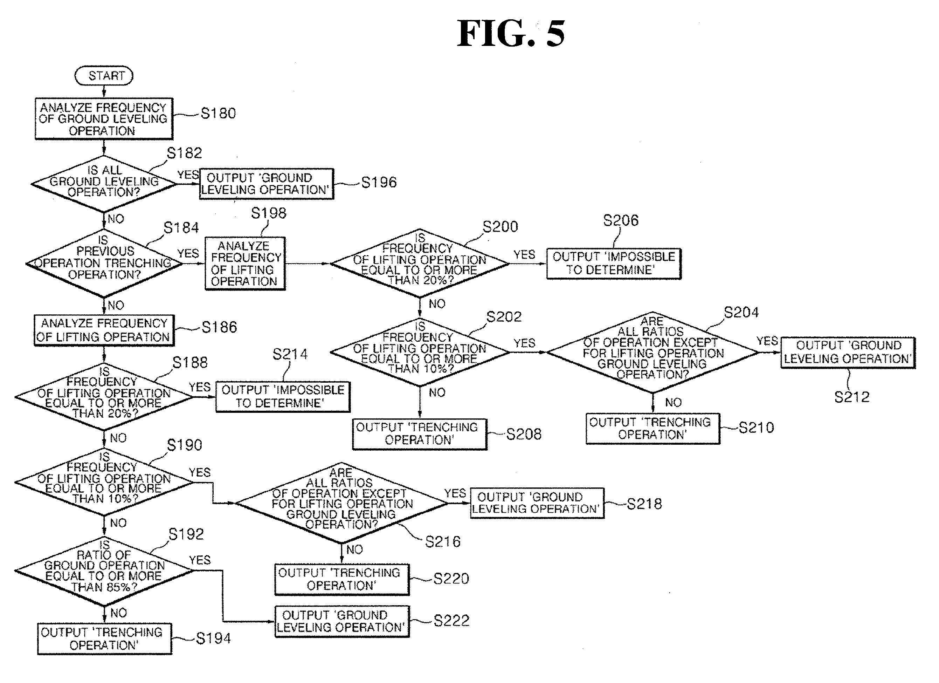

FIG. 5 is a flow chart which determines an operation pattern by applying data to a ground leveling probability model, when the ground leveling operation has a mode value.

Referring to FIG. 5, when the operation having maximum frequency is the ground leveling operation as a result of an frequency of operation analysis, whether or not the ground leveling operation is a fifth reference value is determined (S 180 and S 182). Here, the fifth reference value means the frequency of operation of 100%.

In a case in which the operation is the fifth reference value, that is, in a case in which all of the operation are the ground leveling operation, the probability model analysis unit 122 determines the present operation as the "ground leveling operation", and outputs the result to the screen display unit 124 and the driving control apparatus 126. Accordingly, the "ground leveling operation" is displayed on the screen display unit 124, and the driving control apparatus 126 controls the individual equipment in accordance in accordance with a ground leveling operation pattern (S 196).

In a case in which no operation is the ground leveling operation, the probability model analysis unit 122 determines whether or not the immediately previous operation is the trenching operation (S 184).

When the immediately previous operation is the trenching operation, the probability model analysis unit 122 determines whether or not the frequency of the lifting operation is equal to or more than a sixth reference value (S198 and S200). Here, the sixth reference value means the number of times of the lifting operation that is equal to or more than two.

In a case in which the number of times of the lifting operation is equal to or more than two, the probability model analysis unit 122 determines the present operation as "impossible to determine", and outputs the result to the screen display unit 124 and the driving control apparatus 126 (S206).

In a case in which the number of times of the lifting operation is not equal to or more than two, the probability model analysis unit 122 determines whether or not the frequency of the lifting operation is a seventh reference value (S202). The seventh reference value means the number of times of the lifting operation that is one.

In a case in which the number of times of the lifting operation is not one, the probability model analysis unit 122 determines the present operation as the "trenching operation", and outputs the result to the screen display unit 124 and the driving control apparatus 126 (S208). Accordingly, the "trenching operation" is displayed on the screen display unit 124, and the driving control apparatus 126 controls the individual equipment in accordance with the "trenching operation".

In a case in which the number of times of the lifting operation is one, the probability model analysis unit 122 determines whether or not all the data except for the lifting operation are the ground leveling operation (S204). In a case in which all the data except for the lifting operation are the ground leveling operation, the probability model analysis unit 122 determines the data as the "ground leveling operation" and outputs the result (S212). In a case in which no data except for the lifting operation are the ground leveling operation, the probability model analysis unit 122 determines the data as the "trenching operation" and outputs the result (S210). In a case in which the immediately previous operation is not the trenching operation (S 184), the probability model analysis unit 122 determines whether or not the frequency of the lifting operation is equal to or more than an eighth reference value (S186 and S188). Here, the eighth reference value means the number of times of the lifting operation that is equal to or more than two.

In a case in which the number of times of the lifting operation is equal to or more than two, the probability model analysis unit 122 determines the present operation as "impossible to determine", and outputs the result to the screen display unit 124 and the driving control apparatus 126 (S214).

In a case in which the number of times of the lifting operation is not equal to or more than two, the probability model analysis unit 122 determines whether or not the frequency of the lifting operation is a ninth reference value (S 190). The ninth reference value means the number of times of the lifting operation that is one.

In a case in which the number of times of the lifting operation is not one, the probability model analysis unit 122 determines whether or not a ratio of the ground leveling operation is equal to or more than a tenth reference value. Here, the tenth reference value is 85% (S192). When the ratio of the ground leveling operation is equal to or more than 85%, the probability model analysis unit 122 determines the present operation as the "ground leveling operation", and outputs the result (S222). When the ratio of the ground leveling operation is not equal to nor more than 85%, the probability model analysis unit 122 determines the present operation as the "trenching operation", and outputs the result S 194).

In a case in which the number of times of the lifting operation is one, the probability model analysis unit 122 determines whether or not all the data except for the lifting operation are the ground leveling operation (S216). In a case in which all the data except for the lifting operation are the ground leveling operation, the probability model analysis unit 122 determines the present operation as the "ground leveling operation", and outputs the result S218). In a case in which no data except for the lifting operation are the ground leveling operation, the probability model analysis unit 122 determines the present operation as the "trenching operation", and outputs the result (S220).

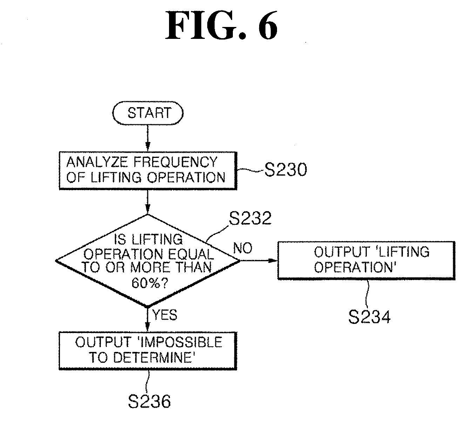

FIG. 6 is a flow chart which determines an operation pattern by applying data to a lifting probability model in a case in which lifting operation has a mode value.

Referring to FIG. 6, when the operation having maximum frequency is the lifting operation as a result of an frequency of operation analysis, whether or not the lifting operation is equal to or more than an eleventh reference value is determined (S230 and S232). Here, the eleventh reference value means the number of times of the lifting operation that is equal to or more than six.

In a case in which the number of times of the lifting operation is equal to or more than six, the probability model analysis unit 122 determines the present operation as the "lifting operation", and outputs the result to the screen display unit 124 and the driving control apparatus 126 (S234). Accordingly, the outputted operation is displayed on the screen display unit 124, and the driving control apparatus 126 controls the individual equipment in accordance with a lifting operation pattern.

In a case in which the number of times of the lifting operation is not equal to or more than six, the probability model analysis unit 122 determines the present operation as "impossible to determine", and outputs the result to the screen display unit 124 and the driving control apparatus 126 (S236).

### [Industrial Applicability]

The method of controlling construction machinery, according to the present invention, may improve fuel efficiency by controlling each operation apparatus of the construction machinery such as an excavator in accordance with operation patterns.

## Claims

1. An apparatus for controlling construction machinery, comprising:
an operation pattern recognition device configured to analyze an operation being performed by the construction machinery; and
a driving control device configured to control driving of each operating device of the construction machinery to match an operation pattern analyzed from the operation pattern recognition device,
wherein the operation pattern recognition device comprises:
a data accumulation unit configured to receive and accumulate any one of a manipulation signal of an operator, and a driving data of individual equipment of the construction machinery;
a operation pattern analysis unit configured to determine a current operation pattern by analyzing data of the accumulated manipulation signal;
a probability model analysis unit configured to analyzes data, which has not been analyzed by the operation pattern analysis unit, by using a probability model; and
a pattern result output unit configured to output operation determined by the operation pattern analysis unit and the probability model analysis unit to the driving control device.

2. The apparatus of claim 1, wherein the operation pattern analysis unit comprises:
a first operation group pattern analysis unit configured to determine whether or not the operation pattern corresponds to at least one operation pattern included in a preset first operation group; and
a second operation group pattern analysis unit configured to determine whether or not the operation patterns, which are not determined by the first operation group pattern analysis unit, correspond to at least one operation pattern included in a preset second operation group.

3. The apparatus of claim 1, wherein the probability model analysis unit analyzes frequencies of operations with respect to the accumulated data, extracts an operation having a high frequency, and determines a pattern of a current operation by applying a probability model, which corresponds to the operation having the high frequency, among the probability models which are prepared for each operation.

4. The apparatus of claim 2, wherein the probability model analysis unit extracts the operation having the high frequency by analyzing frequencies of operations with respect to the accumulated data, and determines a pattern of the current operation by applying a probability model, which corresponds to the operation having the high frequency of operation, among the probability models which are prepared for each operation.

5. The apparatus of claim 4, wherein in a case in which the operation having the high frequency is a first operation, the probability model analysis unit analyzes the frequency of operation by using a first probability model, and
according to the first probability model it is determined that the operation pattern is the first operation in a case in which the frequency of the first operation is higher than a preset reference value, and
it is determined that the operation pattern is not the first operation in a case in which the frequency of the first operation is lower than the reference value.

6. The apparatus of claim 4, wherein in a case in which the operation having the high frequency of operation is a second operation, the probability model analysis unit analyzes the frequency of operation by using a second probability model, and
according to the second probability model, it is determined
that the operation pattern is the second operation in a case in which the frequency of the second operation is equal to or more than a first reference value,
that the operation pattern is not the second operation in a case in which the frequency of the second operation is less than the first reference value and the frequency of the first operation is higher than a second reference value,
that the operation pattern is the second operation when the frequency of the second operation, which is different from the first operation, is equal to or more than a fourth reference value, and the operation pattern as fourth operation when the frequency of the second operation is less than the fourth reference value, in a case in which the frequency of the second operation is lower than the first reference value and the frequency of the first operation is a third reference value, and
that the operation pattern is a fourth operation in a case in which the frequency of the second operation is less than the first reference value, and the frequency of the first operation is less than the third reference value.

7. The apparatus of claim 5, wherein in a case in which the operation having the high frequency of operation is third operation, the probability model analysis unit analyzes the frequency of operation by using a third probability model, and
according to the third probability model,
it is determined that the operation pattern is the third operation in a case in which the frequency of the third operation is equal to or more than a fourth reference value,
it is checked whether or not the immediately previous operation pattern of the current operation pattern is the fourth operation in a case which the frequency of the third operation is less than the fourth reference value, and
thereafter it is determined whether or not the operation pattern is the third operation by checking again the frequency of the first operation, the frequency of the third operation except the first operation, and the frequency of each of the preset reference operation.

8. A method of controlling construction machinery, comprising:
accumulating, upon receipt, any one of a manipulation signal of an operator and a driving data of individual equipment of the construction machinery, through a data accumulation unit;
determining a current operation pattern by analyzing data accumulated in the data accumulation unit, through an operation pattern analysis unit;
determining the operation pattern by using a probability model through a probability model analysis unit in a case in which an operation pattern is not determined by the operation pattern analysis unit; and
outputting the operation pattern to a driving control device, which controls individual equipment, through a pattern result output unit, to correspond to the operation pattern determined from the operation pattern analysis unit and the probability model analysis unit.

9. The method of claim 8, wherein the probability model analysis unit analyzes frequencies of operations with respect to the accumulated data thereby extracting an operation having high frequency, and determines a pattern of the current operation by applying a probability model, which corresponds to the operation having the high frequency, among the probability models which are prepared for each operation.

10. The method of claim 8, wherein in a case in which the operation having the high frequency is a first operation, the probability model analysis unit analyzes the frequency of operation by using a first probability model, and
according to the first probability model,
it is determined that the operation pattern is the first operation in a case in which the frequency of the first operation is higher than a preset eleventh reference value, and
it is determined that the operation pattern is not the first operation in a case in which the frequency of the first operation is lower than the eleventh reference value.

11. The method of claim 8, wherein in a case in which the operation having the high frequency is a second operation, the probability model analysis unit analyzes the frequencies of operation by using a second probability model, and
according to the second probability model, it is determined
that the operation pattern is the second operation in a case in which the frequency of the second operation is equal to or more than a first reference value, determines that the operation pattern is not the second operation in a case in which the frequency of the second operation is lower than the first reference value and the frequency of the first operation is higher than a second reference value,
that the operation pattern is the second operation when the frequency of the second operation, which is different from the first operation, is equal to or more than a fourth reference value,
that the operation pattern is a fourth operation when the frequency of the second operation is less than the fourth reference value, in a case in which the frequency of the second operation is lower than the first reference value and the frequency of the first operation is a third reference value, and
that the operation pattern is the fourth operation in a case in which the frequency of the second operation is less than the first reference value, and the frequency of the first operation is less than the third reference value.

12. The method of claim 8, wherein in a case in which the operation having the high frequency of operation is third operation, the probability model analysis unit analyzes the frequency of operation by using a third probability model, and
according to the third probability model,
it is determined that the operation pattern is the third operation in a case in which the frequency of the third operation is equal to or more than a fourth reference value,
it is checked whether or not the immediately previous operation pattern of the current operation pattern is the fourth operation in a case which the frequency of the third operation is lower than the fourth reference value, and
thereafter it is determined whether or not the operation pattern is the third operation by checking again the frequency of the first operation and the frequency of the third operation except the first operation by each preset reference.
